# EUROPEAN PATENT SPECIFICATION

(11) **EP 2 904 217 B1**
(45) Date of publication and mention of the grant of the patent: **01.05.2019**
(21) Application number: 13844513.5
(22) Date of filing: 01.03.2013
(51) Int. Cl.: F01D 9/02, F02C 7/28, F02K 3/00, F01D 11/00, F16J 15/02

(54) **STATIC GUIDE VANE AND CORRESPONDING GAS TURBINE ENGINE**
LEITSCHAUFEL UND ZUGEHÖRIGER GASTURBINENMOTOR
AUBE DIRECTRICE ET MOTEUR À TURBINE À GAZ ASSOCIÉ

(30) Priority: 01.10.2012 US 201261708306 P
(43) Date of publication of application: 12.08.2015
(73) Proprietor: United Technologies Corporation, Farmington, CT 06032 (US)
(72) Inventor: KLINETOB, Carl, Brian, Zionsville, PA 18092 (US); STILIN, Nicholas, D., Higganum, Connecticut 06441 (US)
(74) Representative: Dehns
(86) International application number: PCT/US2013/028515
(87) International publication number: WO 2014/055109

(56) References cited:
- EP-A1- 2 312 186
- EP-A1- 2 312 186
- WO-A1-2013/191877
- US-A1- 2003 049 129
- US-A1- 2007 158 919
- US-A1- 2008 018 056
- US-B1- 6 514 045

## Description

### BACKGROUND

This application relates to a seal to seal a gap between adjacent platform edges of guide vanes for use in a gas turbine engine.

Gas turbine engines are known, and typically include a fan delivering air into a compressor section. The air is compressed and delivered into a combustion section where it is mixed with fuel and ignited. Products of this combustion pass downstream over turbine rotors driving them to rotate. The turbine rotors drive compressor and fan rotors. Historically, a common turbine rotor has driven a compressor rotor and the fan.

More recently, a gear reduction has been placed to drive the fan, such that the fan and compressor rotors can rotate at different speeds. This has allowed the size of the fan to increase dramatically. The fan typically delivers air into the compressor, but also delivers a portion of air as bypass flow into a bypass duct. With the increase in fan size, a bypass ratio, or the ratio of the air delivered into the bypass duct compared to the air delivered into the compressor has increased.

With the increase in bypass flow, the air delivered into the compressor becomes more valuable, and all air delivered into the compressor is desirably utilized efficiently. Thus, it becomes more important to limit leakage.

Within the compressor and fan sections, there are guide vanes positioned intermediate blade rows on the fan or compressor rotors. These guide vanes have platform edges which extend circumferentially towards an adjacent guide vane. There is often a gap between these edges.

Seals have been proposed to cover this gap, and prevent air from leaking inwardly or outwardly of the guide vanes. The seals to date have required relatively complex structure formed into the platforms, and also require complex assembly techniques.

EP 2 312 186 A1 discloses a prior art static guide vane according to the preamble of claim 1 and a prior art gas turbine engine according to the preamble of claim 4.

WO 2013/191877 A1 discloses a prior art airfoil with an adhesively bonded shroud.

### SUMMARY

According to a first aspect of the present invention, there is provided a static guide vane as set forth in claim 1.

In an embodiment according to the previous embodiment, a vane is designed for use in a compressor section of a gas turbine engine.

In another embodiment according to any of the previous embodiments, the seal is formed of a silicone rubber.

According to a second aspect of the present invention, there is provided a gas turbine engine as set forth in claim 4.

In an embodiment according to the previous embodiment, the vane is in the compressor.

In another embodiment according to any of the previous embodiments, one of the circumferentially adjacent guide vanes is the same one at both of the platforms.

In another embodiment according to any of the previous embodiments, the seal is formed of a silicone rubber.

These and other features may be best understood from the following specification and drawings, the following which is a brief description.

### BRIEF DESCRIPTION OF THE DRAWINGS

Figure 1 schematically shows a gas turbine engine.
Figure 2 shows a detail of a guide vane.
Figure 3A shows one side of a guide vane.
Figure 3B shows an opposed of the guide vane.
Figure 4 shows adjacent guide vanes and seals.
Figure 5 shows a detail of a seal.

### DETAILED DESCRIPTION

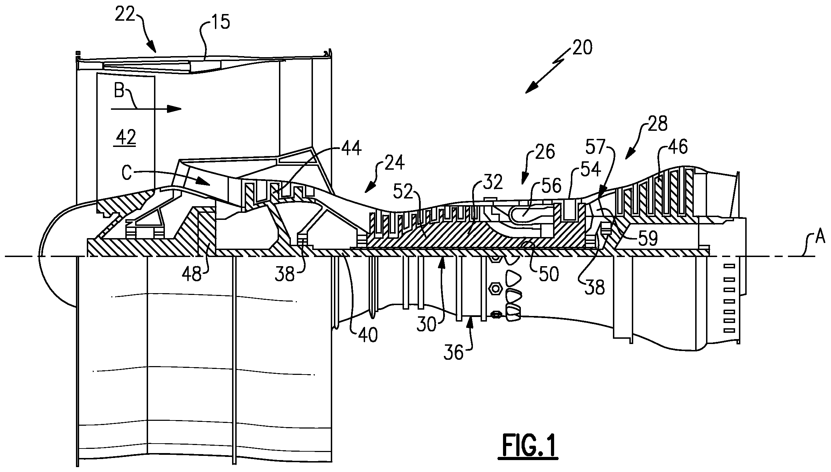

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6), with an example embodiment being greater than ten (10), the geared architecture 48 is an epicyclic gear train, such as a planetary gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668 m (35,000 feet). The flight condition of 0.8 Mach and 10,668 m (35,000 ft), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)] ^{0.5}. The "Low corrected fan tip speed" as disclosed herein according to one non-limiting embodiment is less than about 351 m/s (1150 ft/ second).

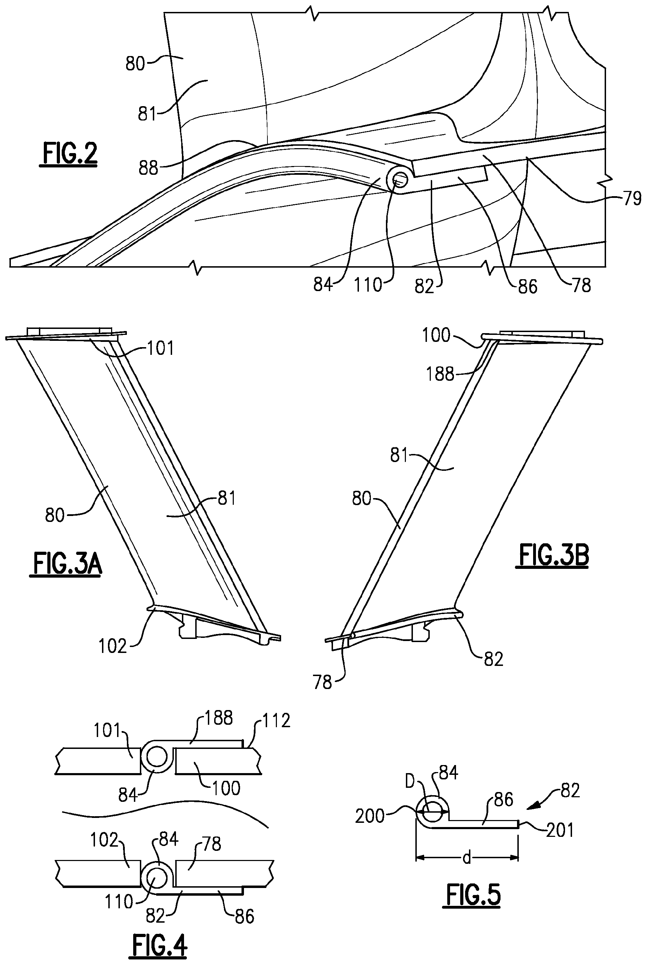

Figure 2 shows a guide vane 80 which is illustrated as a static compressor guide vane. It should be understood that guide vanes utilized in a fan section or even the turbine section may also benefit from teachings of this application. In guide vane 80, an airfoil 81 extends away from an inner platform 78. As shown at 88, an edge of the platform 78 curves relative to the center line A of the engine such as shown in Figure 1.

A seal 82 has a strap portion 86 secured to an underside 79 of the platform 78.

A bulb 84 is positioned outward of the edge 88. The bulb 84 is shown to have a hole 110. The seal 82 may be an extrusion, and may be formed of any elastomer that may be appropriate for the environmental conditions that the seal 82 will see during use. Silicone rubber may be used.

As shown in Figure 3A, the vane 80 has a radially inner platform 102 and a radially outer platform 101 on one side. As shown in Figure 3B, there is also the platform 78 at an inner end, and the platform 100 at a radially outer end of an opposed side. A seal 82 is placed on the Figure 3B side of the platform 78, and a seal 188 at the radially outer platform 100. It should be understood that the platforms 100 and 101 are actually a single platform, as are the platforms 78 and 102 and each wrap around leading and trailing edges of the airfoils 81.

The combination of Figures 3A and 3B simply show that the seals 82 and 188 are placed on only one side of a vane 80. It should be understood that the seals at the radially inner and outer ends could be placed on opposed sides of the airfoil 81. That is, a seal could be placed on the pressure side of the airfoil 81 at, say, the radially outer location, and on the suction side of the airfoil 81 at a radially inner location. However, as shown in combination, there is typically a seal at only one side of the vane 80 at each of the radially inner and outer locations.

Figure 4 shows the seal 82 having the bulb 84 secured to platform 78, but also abutting an edge of the platform side 102. Thus, the seal 82 provides an effective seal at the radially inner edge. Similarly, the seal 188 is shown bonded to the platform 112, and abutting the platform 101. Again, the seal 188 will provide an effective seal at the radially outer location. It would also be possible to place a seal on all four platforms of a guide vane 80, and simply not have any on adjacent vanes 80.

Figure 5 shows a detail of the seal 82, but this would also be true of the seal 188. A diameter D of the bulb 84 is defined, and in one embodiment was 0.3175 cm (0.125 inch). A length d from an outermost point 200 of the bulb to an innermost location 201 of the strap 86 is defined. In one embodiment, d was 1.111 cm (0.4375 inch). In accordance with the invention, a ratio of D to d is between 0.2 and 0.5.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A static guide vane (80) for use in a gas turbine engine (20) comprising:
an airfoil (81) extending between two radial platforms (78,100,101,102), said airfoil (81) and said platforms (78,100,101,102) each having a suction side and a pressure side; and
a seal (188) secured to a side of each of said platforms (78,100,101,102) remote from said airfoil (81), said seal (188) having a strap (86) secured to said side of said platforms (78,100,101,102), and an enlarged bulb (84) sitting outwardly of an edge of said platform (78,100,101,102); **characterised in that**:
there is a seal (188) on only one of said suction and pressure sides at each of said two platforms (78,100,101,102); and
said bulb (84) has an outer diameter (D) and a distance (d), said distance (d) defined between an end (201) of said strap (86) remote from said bulb (84) to a point (200) on said bulb (84) furthest spaced from said end (201), and a ratio of said outer diameter (D) to said distance (d) being between 0.2 and 0.5.

2. The vane (80) as set forth in claim 1, wherein said vane (80) is designed for use in a compressor section (24) of a gas turbine engine (20).

3. The vane (80) as set forth in claim 1 or 2, wherein said seal (188) is formed of a silicone rubber.

4. A gas turbine engine (20) comprising:
a fan (22), a compressor (24), a combustor (26), and a turbine (28); and
one of said fan (22), said compressor (24) and said turbine (28) being provided with a row of static guide vanes (80), the static guide vanes (80) having an airfoil (81) extending between two radial platforms (78,100,101,102), said airfoil (81) and said platforms (78,100,101,102) each having a suction side and a pressure side, and there being circumferentially adjacent static guide vanes (80), with a seal (188) secured to a side of each of said platforms (78,100,101,102) remote from said airfoil (81) on one of said circumferentially adjacent vanes (80) and an enlarged bulb (84) sitting outwardly of an edge of said platform (78,100,101,102) and in engagement with the other of said static guide vanes (80), said seal (188) having a strap (86) secured to said side of said platforms (78, 100, 101, 102);
**characterised in that**:
no seal (188) is secured to the other side of said platforms (78; 100, 101, 102); and
wherein said bulb (84) has an outer diameter (D) and a distance (d), said distance (d) defined between an end (201) of said strap (86) remote from said bulb (84) to a point (200) on said bulb (84) furthest spaced from said end (201), and a ratio of said outer diameter (D) to said distance (d) being between 0.2 and 0.5.

5. The engine (20) as set forth in claim 4, wherein said vane (80) is in the compressor (24).

6. The engine (20) as set forth in claim 4 or 5, wherein said one of said circumferentially adjacent guide vanes (80) is the same one at both of said platforms (78,100,101,102).

7. The engine (20) as set forth in claim 4, 5 or 6, wherein said seal (188) is formed of a silicone rubber.

## Patentansprüche

1. Leitschaufel (80) zur Verwendung in einem Gasturbinenmotor (20), umfassend:
eine Tragfläche (81), die sich zwischen zwei radialen Plattformen (78, 100, 101, 102) erstreckt, wobei die Tragfläche (81) und die Plattformen (78, 100, 101, 102) jeweils eine Saugseite und eine Druckseite aufweisen; und
eine Dichtung (188), die an einer Seite von jeder der Plattformen (78, 100, 101, 102) entfernt von der Tragfläche (81) befestigt ist, wobei die Dichtung (188) einen Gurt (86), der an der Seite der Plattformen (78, 100, 101, 102) befestigt ist und einen vergrößerten Kolben (84) aufweist, der außerhalb einer Kante der Plattform (78, 100, 101, 102) sitzt, **dadurch gekennzeichnet, dass**:
es eine Dichtung (188) an nur einer von den Saug- und Druckseiten an jeder von den zwei Plattformen (78, 100, 101, 102) gibt; und
der Kolben (84) einen Außendurchmesser (D) und einen Abstand (d) aufweist, wobei der Abstand (d) zwischen einem Ende (201) des Gurtes (86) entfernt von dem Kolben (84) zu einem Punkt (200) an dem Kolben (84), der am weitesten von dem Ende (201) beabstandet ist, definiert ist und ein Verhältnis des Außendurchmessers (D) zu dem Abstand (d) zwischen 0,2 und 0,5 ist.

2. Schaufel (80) nach Anspruch 1, wobei die Schaufel (80) zur Verwendung in einem Verdichterabschnitt (24) eines Gasturbinenmotors (20) gestaltet ist.

3. Schaufel (80) nach Anspruch 1 oder 2, wobei die Dichtung (188) aus einem Silikongummi gebildet ist.

4. Gasturbinenmotor (20), umfassend:
ein Gebläse (22), einen Verdichter (24), eine Brennkammer (26) und eine Turbine (28); und
wobei eines von dem Gebläse (22), dem Verdichter (24) und der Turbine (28) mit einer Reihe an Leitschaufeln (80) bereitgestellt ist, wobei die Leitschaufeln (80) eine Tragfläche (81) aufweisen, die sich zwischen zwei radialen Plattformen (78, 100, 101, 102) erstreckt, wobei die Tragfläche (81) und die Plattformen (78, 100, 101, 102) jeweils eine Saugseite und eine Druckseite aufweisen und es umlaufend benachbarte Leitschaufeln (80) gibt, mit einer Dichtung (188), die an einer Seite von jeder der Plattformen (78, 100, 101, 102) entfernt von der Tragfläche (81) an einer von den umlaufend benachbarten Schaufeln (80) befestigt ist, und einem vergrößerten Kolben (84), der außerhalb einer Kante der Plattform (78, 100, 101, 102) sitzt, und in Eingriff mit den anderen von den Leitschaufeln (80), wobei die Dichtung (188) einen Gurt (86) aufweist, der an der Seite der Plattformen (78, 100, 101, 102) befestigt ist;
**dadurch gekennzeichnet, dass**:
keine Dichtung (188) an der anderen Seite der Plattformen (78; 100, 101, 102) befestigt ist; und
wobei der Kolben (84) einen Außendurchmesser (D) und einen Abstand (d) aufweist, wobei der Abstand (d) zwischen einem Ende (201) des Gurtes (86) entfernt von dem Kolben (84) zu einem Punkt (200) an dem Kolben (84), der am weitesten von dem Ende (201) beabstandet ist, definiert ist und ein Verhältnis des Außendurchmessers (D) zu dem Abstand (d) zwischen 0,2 und 0,5 ist.

5. Motor (20) nach Anspruch 4, wobei sich die Schaufel (80) in dem Verdichter (24) befindet.

6. Motor (20) nach Anspruch 4 oder 5, wobei die eine der umlaufend benachbarten Leitschaufeln (80) die gleiche an beiden der Plattformen (78, 100, 101, 102) ist.

7. Motor (20) nach Anspruch 4, 5 oder 6, wobei die Dichtung (188) aus einem Silikongummi gebildet ist.

## Revendications

1. Aube directrice (80) à utiliser dans un moteur à turbine à gaz (20) comprenant :
un profil aérodynamique (81) s'étendant entre deux plateformes radiales (78, 100, 101, 102), ledit profil aérodynamique (81) et lesdites plateformes (78, 100, 101, 102) ayant chacun un côté aspiration et un côté pression ; et
un joint (188) fixé à un côté de chacune desdites plateformes (78, 100, 101, 102) à distance dudit profil aérodynamique (81), ledit joint (188) ayant une sangle (86) fixée audit côté desdites plateformes (78, 100, 101, 102), et un bulbe élargi (84) placé vers l'extérieur d'un bord de ladite plateforme (78, 100, 101, 102) ; **caractérisé en ce que** :
il y a un joint (188) sur seulement un desdits côtés aspiration et pression au niveau de chacune desdites deux plateformes (78, 100, 101, 102) ; et
ledit bulbe (84) a un diamètre extérieur (D) et une distance (d), ladite distance (d) étant définie entre une extrémité (201) de ladite sangle (86) à distance dudit bulbe (84) à un point (200) sur ledit bulbe (84) le plus éloigné de ladite extrémité (201), et un rapport dudit diamètre extérieur (D) à ladite distance (d) étant entre 0,2 et 0,5.

2. Aube (80) selon la revendication 1, dans laquelle ladite aube (80) est conçue pour être utilisée dans une section de compresseur (24) d'un moteur à turbine à gaz (20).

3. Aube (80) selon la revendication 1 ou 2, dans laquelle ledit joint (188) est formé d'un caoutchouc de silicone.

4. Moteur à turbine à gaz (20) comprenant :
un ventilateur (22), un compresseur (24), une chambre de combustion (26), et une turbine (28) ; et
un dudit ventilateur (22), dudit compresseur (24) et de ladite turbine (28) étant doté d'une rangée d'aubes directrices (80), les aubes directrices (80) ayant un profil aérodynamique (81) s'étendant entre deux plateformes radiales (78, 100, 101, 102), ledit profil aérodynamique (81) et lesdites plateformes (78, 100, 101, 102) ayant chacun un côté aspiration et un côté pression, et il y a des aubes directrices (80) circonférentiellement adjacentes, avec un joint (188) fixé à un côté de chacune desdites plateformes (78, 100, 101, 102) à distance dudit profil aérodynamique (81) sur une desdites aubes directrices (80) circonférentiellement adjacentes et un bulbe élargi (84) placé vers l'extérieur d'un bord de ladite plateforme (78, 100, 101, 102) et en prise avec l'autre desdites aubes directrices (80), ledit joint (188) ayant une sangle (86) fixée audit côté desdites plateformes (78, 100, 101, 102) ;
**caractérisé en ce que** :
aucun joint (188) n'est fixé à l'autre côté desdites plateformes (78 ; 100, 101, 102) ; et
dans lequel ledit bulbe (84) a un diamètre extérieur (D) et une distance (d), ladite distance (d) étant définie entre une extrémité (201) de ladite sangle (86) à distance dudit bulbe (84) à un point (200) sur ledit bulbe (84) le plus éloigné de ladite extrémité (201), et un rapport dudit diamètre extérieur (D) à une distance (d) étant entre 0,2 et 0,5.

5. Moteur (20) selon la revendication 4, dans lequel ladite aube (80) est dans le compresseur (24).

6. Moteur (20) selon la revendication 4 ou 5, dans lequel ladite une desdites aubes directrices (80) circonférentiellement adjacentes est la même au niveau des deux dites plateformes (78, 100, 101, 102).

7. Moteur (20) selon la revendication 4, 5 ou 6, dans lequel ledit joint (188) est formé d'un caoutchouc de silicone.
